# FASCICULE DE BREVET EUROPEEN

(11) **EP 3 402 096 B1**
(45) Date de publication et mention de la délivrance du brevet: **11.12.2019**
(21) Numéro de dépôt: 18170586.4
(22) Date de dépôt: 03.05.2018
(51) Int. Cl.: H04B 10/80

(54) **MODULE FSOI COMPACT RESISTANT AUX ENVIRONNEMENTS SEVERES**
KOMPAKTES FSOI-MODUL, DAS WIDERSTANDSFÄHIG GEGEN SCHWIERIGE UMWELTBEDINGUNGEN IST
COMPACT FSOI MODULE CAPABLE OF WITHSTANDING HARSH ENVIRONMENTS

(30) Priorité: 11.05.2017 FR 1700506
(43) Date de publication de la demande: 14.11.2018
(73) Titulaire: THALES, 92400 Courbevoie (FR)
(72) Inventeur: LESUEUR, Guillaume, 78995 ELANCOURT CEDEX (FR); MAANANE, Hichame, 78995 ELANCOURT CEDEX (FR); FRANCISCO, Cédric, 78995 ELANCOURT CEDEX (FR); MERLET, Thomas, 78995 ELANCOURT CEDEX (FR)
(74) Mandataire: Lucas, Laurent Jacques

(56) Documents cités:
- EP-A1- 3 101 699
- EP-A2- 1 345 341
- US-A1- 2004 190 274
- US-B1- 6 359 712

## Description

### DOMAINE DE L'INVENTION

L'invention se rapporte au domaine des interconnexions entre systèmes électroniques. Elle traite en particulier de la transmission de signaux ou de données entre différents sous-ensembles électroniques, différentes cartes électroniques par exemple, constituant un système global.

Elle concerne plus particulièrement les dispositifs de transmission bidirectionnelle de signaux haut-débit en espace libre ou FSOI selon l'acronyme de la dénomination anglo-saxonne "Free Space Optical Interconnection", basés sur l'utilisation de couples de composants chacun constitué d'un émetteur et d'un récepteur d'ondes lumineuses.

### CONTEXTE DE L'INVENTION - ART ANTERIEUR

Pour un nombre croissant d'applications mettant en œuvre des systèmes électroniques comportant un grand nombre de sous-ensembles, le transfert de données d'un sous-ensemble à l'autre présente des difficultés croissantes du fait de la compacité recherchée et du nombre de données transférées. C'est le cas par exemple pour un système constitué de cartes électroniques implantées dans un même rack, qui doivent échanger un grand nombre de données distinctes avec des débits importants.

Dans un tel contexte le transfert d'informations sous forme de signaux électriques impose, du fait de la densité des composants et des débits de transfert d'informations toujours plus importants, des contraintes fortes en termes de connectique et en termes d'isolation des données transférées vis-à-vis des couplages parasites pouvant se produire entre les différentes liaisons de connexion. Ce point devient primordial dans les systèmes électriques et électroniques embarqués, où la dualité complexité-encombrement devient de plus en plus génératrice de contraintes.

Or, s'agissant de liaisons électriques à haut débit, assurer l'isolation de ces liaisons vis-à-vis des champs électromagnétiques parasites, passe par la mise en place de capots de blindage encombrants, de cordons blindés devant respecter des rayons de courbure donnés et présentant une rigidité et un encombrement accrus du fait du blindage.

La nécessité de respecter les contraintes d'immunité des liaisons face aux champs électromagnétiques parasites se traduit généralement par le fait que l'ensemble des interconnexions entre cartes ou sous-ensembles limite les possibilités de réduire l'encombrement global de l'équipement ou du système qu'ils constituent, alors même que les composants électroniques élémentaires deviennent quant à eux de plus en plus intégrés et donc de moins en moins gourmands en place. Le nombre de liens d'interconnexion entre sous-ensembles et par suite, la place nécessaire pour réaliser ces interconnexions devient donc un facteur dimensionnant en termes d'encombrement d'un tel système.

Par ailleurs, dans certains environnements sévères, il est difficile voire impossible, considérant le nombre des liaisons d'interconnexion mises en jeu, d'allier immunité aux champs électromagnétiques, tenue aux températures extrêmes (au-delà de 85°) et réduction de l'encombrement.

Une solution pour s'affranchir des contraintes citées précédemment consiste à envisager le transfert de données entre sous-ensembles au moyen de liaisons optiques. La transmission de signaux par liaison optique permet notamment de diminuer le poids et l'encombrement de l'ensemble des interconnexions du système. Le passage par des liaisons optiques permet en outre, avantageusement, de profiter de l'isolation galvanique naturelle et intrinsèque dont les signaux optiques font montre.

Parmi les solutions mettant en œuvre une transmission de données par liaison optique, une solution consiste à utiliser un système de transmission bidirectionnel de signaux haut débit en espace libre FSOI (Free Space Optical Interconnexion) basé sur l'utilisation de couples de composants, chaque couple étant constitué d'un émetteur optique, et d'un récepteur optique, une matrice de micro LEDs et une photodiode par exemple.

Ce type de solution permet avantageusement de s'affranchir de tout lien physique entre les deux équipements connectés de cette façon. On élimine du même coup les contraintes liées à l'encombrement des connecteurs et des câbles de liaison et au blindage nécessaire de ces derniers.

Cependant, les solutions de FSOI récemment développées ne constituent pas, actuellement, une solution alternative satisfaisante à l'utilisation de liaisons d'interconnexion électriques filaires.

En effet les solutions actuellement développées sont basées sur l'utilisation de diodes laser dans le but de disposer d'une bande passante la plus large possible.

Or la transmission d'un signal via une onde laser d'un émetteur vers un récepteur nécessite le plus souvent un alignement strict de ces éléments, alignement qui représente en soi une contrainte forte d'implantation et qui impose des tolérances d'alignement étroites en termes de distance et d'angle.

De plus, la limitation principale à l'utilisation de diodes laser est qu'elle impose généralement de limiter les variations de température du milieu, du fait de la sensibilité des diodes laser à la température. Les performances d'une diode laser, en termes de puissance, de longueur d'onde émise et de rendement notamment, varient, en effet, de manière importante, lorsqu'elle est utilisée dans une plage de température d'utilisation large.

Cette limitation s'ajoute par ailleurs à celle résultant du fait que les composants utilisés dans les solutions existantes sont des composants du marché, dont le fonctionnement est assuré pour une gamme de températures limitée, comprise entre -40°C et +85°C qui ne couvre pas la gamme de températures à laquelle certains équipements peuvent être soumis, une gamme comprise entre -55°C et +125°C par exemple.

Par ailleurs, les composants utilisés dans les solutions existantes sont des composants conditionnés dans des boitiers individuels assurant une fonction unique de réception (photodiode) ou d'émission (diode Laser) de sorte que pour assurer une liaison bidirectionnelle entre deux sous-ensembles d'un même équipement, deux cartes électroniques placées dans un même rack par exemple, il faut réaliser, pour chacune des liaisons séparément, l'implantation et l'alignement des composants constituant la liaison considérée.

Par ailleurs également, si le faisceau lumineux émis par chaque composant émetteur et reçu par le composant récepteur qui lui est associé est robuste naturellement face aux perturbations électromagnétiques, les composants émetteurs et récepteurs communément utilisés dans les interconnexions FSOI développées actuellement ne le sont pas. En effet, le câblage de ces composants est généralement réalisé par report en surface comme dans le cas des boitiers du type QFN, de sorte que leurs broches de connexion sont à l'air libre et donc susceptibles de capter des signaux parasites.

La demande de brevet européen publiée le 07/12/2016 sous la référence EP 3 101 699 A1 décrit et revendique une structure permettant de réaliser des modules d'émission ou de réception optiques en espace libre (FSOI) destinés à établir des connexions optiques entre des circuits électroniques. La structure proposée dans ce document permet de réaliser des modules de communication électro-optiques et optoélectroniques implantables directement sur un circuit électronique. Selon le document, le problème du positionnement précis des modules d'émission ou de réception ainsi réalisés sur le circuit électronique hôte est résolu par l'intermédiaire de jeux de mires permettant l'alignement mécanique des différents éléments constituant la structure.

### PRESENTATION DE L'INVENTION

Un but de l'invention est de proposer un dispositif permettant de réaliser un système de transmission bidirectionnel de signaux haut débit en espace libre (FSOI) ne présentant pas les limitations supportées par les systèmes FSOI actuels.

A cet effet l'invention a pour objet, selon un premier aspect, un module de connexion optique pour réaliser une liaison optique bidirectionnelle permettant de faire transiter des données à haut débit (sans perturbation) entre deux éléments d'un équipement électronique, le module comportant au moins un élément émetteur capable d'émettre une onde lumineuse modulée par un signal électrique ledit émetteur émettant un faisceau non focalisé et un élément récepteur capable de recevoir une onde lumineuse modulée et de restituer sous forme électrique le signal modulant, lesdits éléments émetteur et récepteur étant agencés dans un boitier d'encapsulation.

Le boitier d'encapsulation est configuré pour former un écran destiné à protéger, à immuniser, lesdits éléments émetteur et récepteur contre les champs électromagnétiques environnant le module.

Sa paroi supérieure présente des ouvertures disposées en regard de la surface de l'élément émetteur et de la surface de l'élément récepteur respectivement et permet le passage de la lumière à travers le boitier.

Ledit boitier d'encapsulation définit deux cavités séparées dans lesquelles sont respectivement logés l'élément émetteur et l'élément récepteur.

Selon différentes dispositions le module de connexion optique selon l'invention peut en outre présenter diverses caractéristiques techniques additionnelles, listées ci-après, caractéristiques qui peuvent être considérées chacune séparément ou en combinaison avec une ou plusieurs autres caractéristiques.

Ainsi, selon une première disposition, le module de connexion optique selon l'invention comporte une structure de base constituée par un circuit imprimé permettant l'interconnexion des composants logés dans le module et la connexion du module à l'équipement sur lequel il est monté. Le boitier d'encapsulation est en outre configuré pour venir coiffer la surface dudit circuit imprimé.

Selon une autre disposition, l'élément émetteur du module de connexion optique selon l'invention est un circuit à matrice de micro LEDs et l'élément récepteur une photodiode.

Selon une autre disposition, le boitier d'encapsulation présente, au niveau des ouvertures de sa paroi supérieure, deux fenêtres en matériau transparent.

Selon une autre disposition, les faces externes des fenêtres de la paroi supérieure du boitier d'encapsulation sont revêtues d'une couche écran formé de particule de matériaux conducteur électrique et transparent à la lumière.

Selon une forme de réalisation particulière la couche écran de revêtement des fenêtres est un film d'oxyde d'indium-étain (ITO).

Selon une autre forme de réalisation particulière la paroi supérieure du boitier d'encapsulation est recouverte, au moins au niveau des ouvertures de la paroi supérieure d'une structure grillagée conductrice faisant écran aux champs électromagnétiques et dont les mailles sont dimensionnées de façon à laisser passer la lumière émise par l'élément émetteur et la lumière reçue par l'élément récepteur.

Selon une autre disposition, le boitier d'encapsulation est un boitier métallique connecté à la masse.

Selon une autre disposition, le boitier d'encapsulation est un boitier en matériau organique dont la surface externe de la paroi supérieure est recouverte d'une structure grillagée conductrice connecté à la masse, et dont les faces externes des parois latérales sont revêtues d'une couche de matériau conducteur, une couche de métallisation par exemple.

Selon une autre disposition, le boitier d'encapsulation étant un boitier en matériau organique, l'élément émetteur est monté sur la face interne de la paroi supérieure du boitier d'encapsulation, au niveau d'une des fenêtres transparentes. Ladite face interne forme un circuit imprimé configuré pour connecter l'élément émetteur au circuit imprimé formant la structure de base.

Selon une autre disposition, le boitier d'encapsulation est un boitier en matériau organique. L'élément émetteur est monté sur la face externe de la paroi supérieure du boitier d'encapsulation et connecté à la face interne de ladite paroi supérieure. Ladite face interne forme par ailleurs un circuit imprimé configuré pour connecter l'élément émetteur au circuit imprimé formant la structure de base.

Selon une forme de réalisation particulière les éléments émetteur et récepteur sont des composants en technologie flip chip.

Selon un deuxième aspect, l'invention a également pour objet un ensemble de deux modules de connexion optique agencés l'un par rapport à l'autre de telle façon que la lumière émise par l'élément émetteur d'un des modules soit reçue par l'élément récepteur de l'autre module et inversement, l'élément émetteur de chacun des modules émettant une onde lumineuse de longueur distincte λ1 ou λ2, l'élément récepteur d'un des modules étant apte à recevoir la longueur d'onde λ1 émise par l'élément émetteur de l'autre module.

Selon une disposition particulière relative à l'ensemble de deux modules de connexion optique selon l'invention, chaque module comporte un filtre disposé au niveau de la cavité de l'élément récepteur et configuré pour filtrer la longueur d'onde du module émetteur placé dans ce même module.

L'invention consiste ainsi principalement en un dispositif intégré comportant un ensemble de composants réalisant une fonction d'émission et une fonction de réception d'ondes lumineuses, conditionnés dans un boitier approprié, configuré pour former un dispositif compact, permettant tout à la fois, de limiter la perturbation des composants émetteur et récepteur par des champs électromagnétiques extérieurs et pour faciliter la mise en place de liaisons optiques bidirectionnelles entre deux équipements.

Avantageusement, le dispositif selon l'invention présente un boitier configuré pour limiter la diaphonie entre les composants émetteur et récepteur qui y sont logés.

De manière également avantageuse les composants émetteur et récepteur utilisés sont choisis pour leur plage de température de fonctionnement étendue et les facilités qu'ils procurent en termes de mise en place.

### DESCRIPTION DES FIGURES

Les caractéristiques et avantages de l'invention seront mieux appréciés grâce à la description qui suit, description qui s'appuie sur les figures annexées qui présentent:
la figure1, une représentation schématique en coupe longitudinale du dispositif selon l'invention;
la figure 2, une illustration schématique du mode d'emploi du dispositif selon l'invention;
les figures 3 à 5, des représentations schématiques de trois modes de réalisation du dispositif selon l'invention, pris comme exemples.

Sur les figures annexées, un même repère numérique ou alphanumérique renvoie toujours à un même élément ou une même fonction.

### DSCRIPTION DETAILLEE

Le dispositif selon l'invention a pour objet de permettre la réalisation d'interconnexions optiques de signaux haut débit bidirectionnelles en milieux considérés comme sévères tant du point de vue des températures de fonctionnement, que des perturbations électromagnétiques ou que des contraintes mécaniques (résistance aux vibrations notamment).

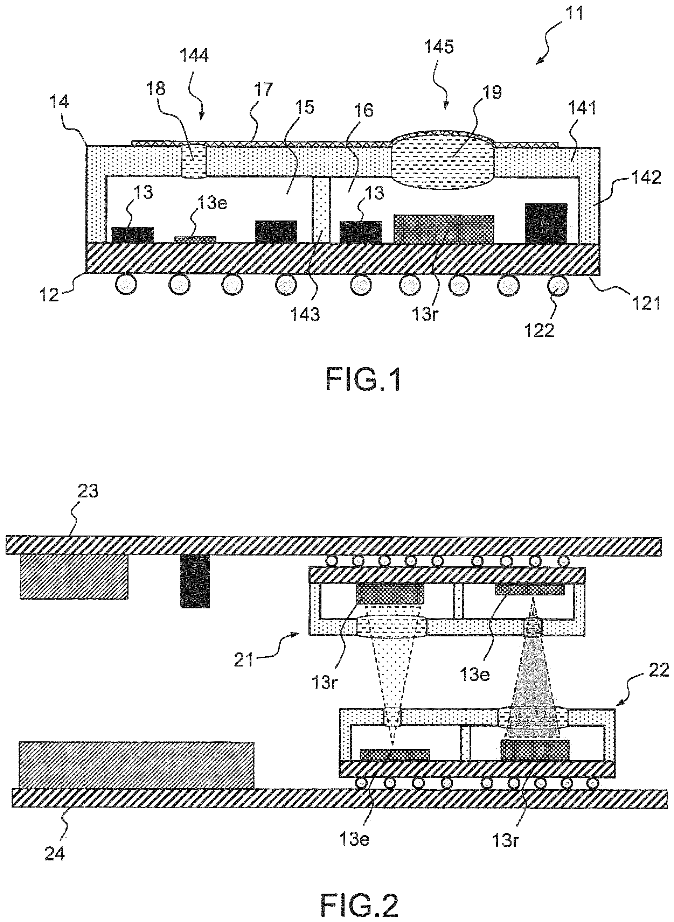

Le dispositif selon l'invention consiste en un module 11 comportant principalement, comme l'illustre la figure 1, une structure de base 12 en circuit imprimé sur laquelle sont montés les différents circuits 13 du module 11, et un boitier d'encapsulation 14 configuré pour former une cavité fermée par la structure de base 12.

La structure de base 12 et le boitier d'encapsulation 14 sont dimensionnés de façon à ce que la cavité formée puisse héberger les composants électroniques 13 nécessaires à la réalisation de la connexion optique, et principalement un composant émetteur d'ondes lumineuses 13ₑ et un composant récepteur 13ᵣ d'ondes lumineuses.

Le boitier 14 est configuré de façon à constituer une enveloppe électriquement conductrice formant un écran qui immunise les composants émetteur 13ₑ et récepteur 13ᵣ contre les champs électromagnétiques parasites pouvant altérer leur fonctionnement et, par suite, la qualité de la transmission optique et donc le bon fonctionnement du système.

A cet effet il est constitué par une structure électriquement conductrice comportant une paroi supérieure 141 avec une face interne délimitant la cavité et une face externe, ainsi que des parois latérales 142 par lesquelles il est relié à la structure de base 12.

Il comporte en outre une cloison interne intermédiaire 143 qui sépare la cavité délimitée par le capot d'encapsulation 14 en deux cavités 15 et 16 dans lesquelles sont respectivement placés le composant émetteur 13ₑ et le composant récepteur 13ᵣ.

Avantageusement cette cloison interne 143 limite le risque d'exposition du composant récepteur 13ᵣ à l'onde lumineuse émise par le composant émetteur 13ₑ et par suite le risque de diaphonie ou "crosstalk" selon la dénomination anglo-saxonne.

Selon l'invention, le boitier d'encapsulation 14 comporte au niveau de sa paroi supérieure 141 deux ouvertures 144 et 145, placées de façon à se trouver chacune en vis-vis du composant émetteur 13ₑ ou du composant récepteur 13ᵣ et destinées à laisser passer les ondes lumineuses à travers la paroi du boitier 14. Afin d'assurer l'étanchéité du module 11, ces deux ouvertures 144 et 145 sont préférentiellement pourvues de fenêtres transparentes.

Dans une forme de réalisation préférée, les deux fenêtres transparentes sont constituées par deux lentilles 18 et 19, une lentille de collimation 18 placée dans l'ouverture en regard du composant émetteur 13ₑ et une lentille collectrice 19 placée dans l'ouverture en regard du composant récepteur 13ᵣ, ces lentilles ayant pour fonction d'améliorer les bilans optiques à l'émission et à la réception.

Par ailleurs, de manière préférentielle également, afin d'éviter que les deux ouvertures 144 et 145 ménagées sur la paroi supérieure 141 du boitier d'encapsulation 14 n'altèrent l'efficacité de l'écran, du blindage, réalisé par le boitier, les faces externes des fenêtres transparentes montées dans ces ouvertures, sont couvertes par un revêtement 17 configuré pour empêcher la propagation de champs électromagnétiques parasites à l'intérieur du boitier d'encapsulation 14 tout en laissant passer la lumière.

Selon le mode de réalisation envisagé le revêtement 17 peut être de différentes natures. Il peut consister en une couche écran formée de particules d'un matériau conducteur électrique et transparent à la lumière. Il peut en outre se trouver localisé juste au niveau des ouvertures 144 et 145, ou bien couvrir tout ou partie des parois 141 et 142 du boitier 14.

Ainsi, dans un mode de réalisation préféré la couche écran 17 consiste en un film d'oxyde d'indium-étain ou ITO ("Indium Tin Oxide") selon la dénomination anglo-saxonne.

On rappelle ici que l'oxyde d'indium-étain, ou oxyde d'indium dopé à l'étain, est un mélange d'oxyde d'indium(III) (In2O3) et d'oxyde d'étain (IV) (SnO2).

Alternativement le revêtement 17 peut consister en une structure maillée conductrice, dont les mailles sont dimensionnées de façon à réaliser l'écran désiré vis-à-vis des ondes électromagnétiques tout en laissant majoritairement passer la lumière.

D'un point de vue fabrication, la base du module est préférentiellement un circuit imprimé 12 sur lequel les divers composants 13 intégrés au module 11, sont reportés, sous forme de boitiers CMS préférentiellement.

Le boitier d'encapsulation 14 est quant à lui fixé directement, par collage par exemple, sur le circuit formant la structure de base 12 et relié à la masse par l'intermédiaire de ce dernier.

Une telle structure permet avantageusement de réaliser un module 11 compact et assurant aux composants 13 qu'il renferme une complète immunité vis-à-vis des perturbations électromagnétiques extérieures.

Suivant l'équipement sur lequel il est destiné à être monté, Le module de connexion optique 11 selon l'invention peut être pourvu de moyens de connexion divers. Les moyens de connexion utilisés sont déterminés de façon à limiter l'introduction de perturbations électromagnétiques induites par les liaisons électriques avec l'équipement.

Ainsi, de manière préférentielle, dans le cas où le module 11 selon l'invention est destiné à être implanté sur des cartes électroniques, les entrées-sorties du circuit imprimé 12 formant la structure de base sont reportés sur des points de connexion situés sur la face externe 121 du circuit imprimé, constituant la face de contact du module 11 avec la carte électronique.

De manière préférentielle également, ces points de connexion sont équipés de billes de connexion 122 destinées, lors du report du module 11 sur la carte électronique, à assurer, par fusion, leur connexion électrique avec les points de connexion correspondants sur la carte électronique. Le module 11 selon l'invention est ainsi monté comme un composant de type BGA (Ball Grid Array selon la terminologie anglo-saxonne).

Un tel mode de connexion permet avantageusement de réaliser des liaisons blindées courtes entre le module 11 selon l'invention et la carte électronique sur laquelle il est monté. En effet ce mode de connexion permet de disposer, malgré la compacité du module 11, d'une pluralité de points de connexion à la masse pouvant être agencés de façon à assurer, sous le module, un blindage des différentes liaisons entre le module 11 et la carte électronique au niveau des points de connexion accès par des pattes de masse et conserver l'immunité aux champs électromagnétiques parasites.

Afin de répondre aux exigences de compacité et de tenue en température qui lui sont également imposées le module 11 de connexion optique selon l'invention intègre des composants, les composants émetteur 13ₑ et récepteur 13ᵣ notamment, présentant des caractéristiques physiques (tenue en température, conditionnement,...) et électriques appropriées.

Dans un mode de réalisation préféré, le module 11 selon l'invention est constitué d'un émetteur 13ₑ à matrice de micro LEDs (µLED), et d'une photodiode de réception 13ᵣ, les deux composants 13ₑ et 13ᵣ étant conditionnés sous des formes "flip chip" favorisant leur immunité vis-à-vis des perturbations électromagnétiques parasites et contribuant au caractère compact du module 11.

L'émetteur 13ₑ à matrice de micro LEDs est ici choisi car il présente des caractéristiques de rayonnement offrant une grande souplesse d'alignement et ne nécessite donc pas d'être aligné de manière particulièrement précise sur le récepteur 13ₑ auquel il est destiné à transmettre une onde lumineuse, contrairement à un émetteur à diode laser par exemple.

Il est par ailleurs sujet à des variations faibles de longueur d'onde et de puissance émises en fonction de la température, contrairement aux sources laser telles que, notamment, les sources Laser à cavité verticale ou VCSELs ("Vertical-Cavity Surface-Emitting Laser") selon la dénomination anglo-saxonne.

En outre, de tels émetteurs existent pour différentes longueurs d'ondes (couleurs).

Ils présentent également une grande bande passante, compatible d'une transmission de données à plusieurs Gigabits par seconde.

Il peut s'agir par exemple d'un composant émetteur à matrice de micro LEDs réalisé en en technologie GaN (Nitrure de Gallium), peu sensible aux variations de température jusqu'à 150°.

La photodiode de réception 13ᵣ, quant à elle, est choisie pour son faible encombrement; Il peut s'agir, par exemple, d'une diode PIN ou, à défaut, d'une photodiode à avalanche ou APD ("avalanche Photo Diode") selon la dénomination anglo-saxonne.

L'utilisation d'une photodiode PIN permet une grande miniaturisation. Elle requiert une tension d'alimentation couramment présente dans les cartes électroniques tout en étant peu sensible aux variations de température.

Les photodiodes dites APD sont sensibles aux variations de température mais disposent d'un gain beaucoup plus élevé. Elles nécessitent également des tensions d'alimentations très élevées.

Selon l'invention, le composant récepteur 13ᵣ est choisi pour être sensible préférentiellement à la longueur d'onde émise par le composant émetteur auquel il est destiné à être associé.

Cependant, dans un mode de réalisation préféré, afin d'éviter les risques de diaphonie ou "crosstalk" entre le composant récepteur 13r du module 11 considéré et le composant émetteur 13ₑ placé dans ce même module 11, risques évoqués précédemment, les deux composants émetteur 13ₑ et récepteur 13ᵣ d'un même module 11 peuvent être choisis pour fonctionner à des longueurs d'ondes différentes. Dans ce cas le module 11 selon l'invention peut adopter deux configurations jumelées, comme illustré par la figure 2 :
- une première configuration 21 pour laquelle le module 11 comporte un composant émetteur 13ₑ conçu pour émettre sur une longueur d'onde λ₁ donnée et un composant récepteur 13ᵣ conçu pour recevoir des ondes lumineuse de longueur d'onde donné λ₂ différente de λ₁;
- une seconde configuration 22 pour laquelle le module 11 comporte un composant émetteur 13ₑ conçu pour émettre sur la longueur d'onde λ₂ et un composant récepteur 13ᵣ conçu pour recevoir des ondes lumineuse de longueur d'onde λ₁.

Selon ce mode particulier de réalisation, l'établissement d'une liaison optique entre deux sous-ensembles d'un systèmes, deux cartes électroniques 23 et 24 par exemple, passe par l'utilisation de deux modules jumelés, présentant respectivement la première 21 et la seconde 22 configuration, disposés de telle façon que le récepteur d'un module se trouve placé en regard de l'émetteur de l'autre module.

Par ailleurs, dans une forme particulière de réalisation du module selon l'invention et afin, également, d'éviter les réflexions parasites en provenance d'autres sources, d'autres émetteurs en particulier, un filtre coloré (non représenté), destiné à filtrer les longueurs d'ondes parasites, est placé au niveau de l'élément récepteur 13r du module 11, au niveau de la fenêtre transparente 148 placée dans l'ouverture 145 en regard du composant récepteur 13ᵣ par exemple.

D'un point de vue structurel, le module 11 selon l'invention peut présenter divers agencements, dépendant notamment du nombre de composants 13 intégrés dans le module et de la compacité souhaitée.

Ses différents éléments structurels, en particulier le boitier d'encapsulation 14 et le revêtement 17 configuré pour empêcher la propagation de champs électromagnétiques parasites à l'intérieur de celui-ci, peuvent par ailleurs être réalisés de différente façon.

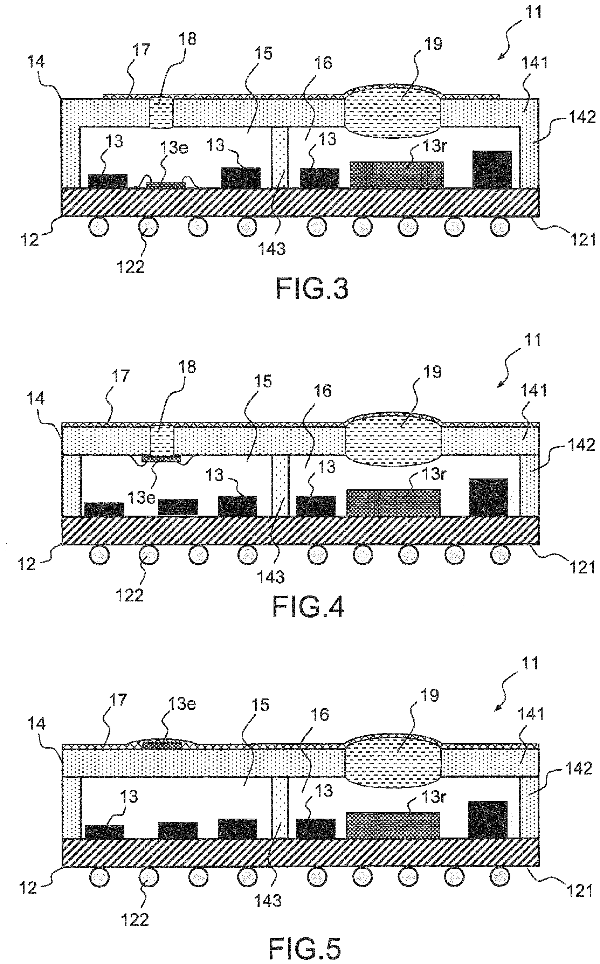

Les figures 3 à 5 illustrent différentes formes de réalisation correspondant à des arrangements particuliers pris comme exemples.

L'illustration de la figure 3 correspond à un exemple de réalisation dans lequel tous les composants 13 logés dans le module 11 sont montés sur le circuit imprimé formant la structure de base 12.

Le boitier d'encapsulation 14 est quant à lui un boitier métallique comportant, au niveau des deux ouvertures 144 et 145 de sa paroi supérieure 141, des optiques 18 et 19 protégées, soit par une couche écran consistant en un film d'oxyde d'indium-étain (ITO), soit par une structure maillée conductrice. Dans le module 11, les deux fonctions (émission/réception) sont isolées l'une de l'autre par la cloison 143 du boitier 14 pour éviter les perturbations internes.

Dans la variante de réalisation de la figure 3, les composants 13 utilisés sont destinés à être implantés et connectés au circuit imprimé formant la structure de base 12 par l'intermédiaire de connexions classiques, broches soudées ou connexions filaires par exemple.

Alternativement, les composants utilisés 13, dans la mesure où ils sont disponibles dans cette forme, peuvent être des composants destinés à être montés par report direct sur le circuit imprimé 12 formant la structure de base, tels que des composants "flip-chip" par exemple, dont le montage sur le circuit imprimé 12 est réalisé au moyen de billes en or interposées entre les entrées-sorties du composant 13 considéré et le circuit imprimé 12 le composant étant lui-même collé à la surface de ce dernier.

La figure 4 propose une variante de réalisation permettant, au prix d'une structure plus complexe, d'augmenter la compacité du module 11. Dans cette variante, en effet, le composant émetteur 13ₑ (circuit à matrice de micro LEDs) est positionné sur la face interne de la paroi supérieure 141 du boitier d'encapsulation 14 au niveau de l'ouverture 144 du boitier 14 correspondante.

Pour ce faire ce dernier est réalisé en matériau organique diélectrique, la paroi supérieure 141 et les parois latérales 142 formant un circuit imprimé permettant de raccorder le circuit émetteur 13ₑ au circuit imprimé 12 formant la structure de base.

Ce positionnement, outre l'avantage qu'il procure en termes d'accroissement de compacité permet avantageusement de positionner le composant émetteur au plus près de l'ouverture du boitier d'encapsulation 14 et de profiter ainsi au mieux des avantages en termes de facilité de positionnement du module 11 que procure la faible directivité de la matrice de micro LEDs.

Il est à noter que dans ce mode de réalisation, les parois 141 et 142 du boitier d'encapsulation 14 étant réalisées en matériau diélectrique les faces externes du boitier 14 sont recouvertes sur toute leur surface d'une couche de matériau conducteur formant écran aux perturbations électromagnétiques.

Cette couche de matériau conducteur peut être constituée par la métallisation des faces externes des parois 141 et 142 du boitier d'encapsulation 14, les ouvertures étant quant à elles pourvues de couches de protection telles que celles décrites précédemment (structure conductrice maillée ou film ITO).

Alternativement cette couche de matériau conducteur peut être constituée d'une structure maillée, électriquement conductrice, couvrant la totalité des parois 141 et 142 du boitier 14 y compris aux emplacements des ouvertures144 et 145.

La figure 5 propose une autre variante de réalisation permettant, au prix d'une structure plus complexe également, d'augmenter la compacité du module 11.

Dans la forme de réalisation de la figure 5, le composant émetteur 13ₑ (circuit à matrice de micro LEDs) est positionné sur la face externe de la paroi supérieure 141 du boitier d'encapsulation 14 en lieu et place de l'ouverture 114 du boitier 14 correspondante (i.e. dans cette forme de réalisation la fenêtre 144 n'existe pas). Cette disposition permet de profiter encore mieux des avantages en termes de facilité de positionnement du module 11 que procure la faible directivité de la matrice de micro LEDs.

Comme pour l'exemple de réalisation de la figure 4, la paroi du boitier d'encapsulation 14 est réalisée en matériau diélectrique les faces externes du boitier sont recouvertes sur toute leur surface d'une couche de matériau conducteur formant écran aux perturbations électromagnétiques.

Cette couche de matériau conducteur est ici préférentiellement constituée par une structure maillée conductrice (17), connecté à la masse, recouvrant la surface externe de la paroi supérieure 141 du boitier 14, y compris aux emplacements du composant émetteur 13ₑ et de l'ouverture destinée à laisser entrer la lumière dans la cavité 16 renfermant l'élément récepteur 13ᵣ, les faces externes des parois latérales du boitier 14 étant revêtues d'une couche de matériau conducteur, une couche de métallisation par exemple.

Alternativement elle peut consister en une structure maillée électriquement conductrice (17) couvrant la totalité des parois 141 et 142 du boitier d'encapsulation 14.

Tel que décrit de manière générale ou à travers les exemples de réalisation présentés, le dispositif 11 selon l'invention s'inscrit ainsi avantageusement dans un contexte général de recherche de solutions pour réaliser des équipements électroniques à la fois plus compactes et plus robustes en termes de variations de température et plus performants en termes de compatibilité électromagnétique (ou CEM), autrement dit de résistance aux perturbations électromagnétiques qui, si elles ne sont pas de nature de perturber les faisceaux d'ondes lumineuses formant une liaison optique, peuvent perturber le fonctionnement des composants émetteur 13ₑ et récepteurs 13ᵣ eux-mêmes, ainsi que celui des composants 13 nécessaires à leur fonctionnement.

Par ailleurs l'utilisation du module 11 de connexion optique selon l'invention rend possible la miniaturisation des cartes électroniques, et permet d'accroître la robustesse de toutes les électroniques embarquées soumises à de fortes variations de températures et à des attaques électromagnétiques.

Elle permet en outre d'envisager le développement d'architectures multicartes, supportant des fonctionnalités mettant en œuvre de nombreuses connexions inter-cartes par liaisons optiques, le développement de telles architectures ne pouvant auparavant pas être envisagé, du fait du nombre trop important de connexions nécessaires et donc du nombre trop important de connecteurs devant être implantés sur les cartes pour assurer la totalité des interconnexions nécessaires à la mise en œuvre de ces fonctionnalités.

## Revendications

1. Module (11) de connexion optique en espace libre de type "Free Space Optical Interconnection", FSOI, pour réaliser une liaison optique bidirectionnelle permettant de faire transiter des données à haut débit (sans perturbation) entre deux éléments (23, 24) d'un équipement électronique, **caractérisé en ce qu'**il comporte au moins un élément émetteur (13ₑ) capable d'émettre une onde lumineuse modulée par un signal électrique ledit émetteur (13ₑ) émettant un faisceau non focalisé et un élément récepteur (13ᵣ) capable de recevoir une onde lumineuse modulée et de restituer sous forme électrique le signal modulant, lesdits éléments émetteur (13ₑ) et récepteur (13ᵣ) étant agencés dans un boitier d'encapsulation (14) configuré pour former un écran destiné à immuniser lesdits éléments émetteur (13ₑ) et récepteur (13ᵣ) contre les émissions électromagnétiques extérieures environnant le module (11), dont la paroi supérieure (141) présente des ouvertures (144, 145) disposées en regard de la surface de l'élément émetteur (13ₑ) et de la surface de l'élément récepteur (13ᵣ) respectivement, lesdites ouvertures formant deux fenêtres configurées pour laisser passer les ondes lumineuses et faire écran aux autres perturbations électromagnétiques extérieures et permettre le passage de la lumière à travers le boitier (14); ledit boitier d'encapsulation (14) définissant deux cavités séparées (15, 16) dans lesquelles sont respectivement logés l'élément émetteur (13ₑ) et l'élément récepteur (13ᵣ).

2. Module (11) de connexion optique, FSOI, selon la revendication 1, **caractérisé en ce qu'**il comporte une structure de base constituée par un circuit imprimé (12) permettant l'interconnexion des composants (13) logés dans le module (11) et la connexion du module (11) à l'équipement (23, 24) sur lequel il est monté, le boitier d'encapsulation (14) étant configuré pour venir coiffer la surface dudit circuit imprimé (12).

3. Module (11) de connexion optique selon l'une des revendications 1 ou 2, **caractérisé en ce que** l'élément émetteur (13ₑ) est un circuit à matrice de micro LEDs et l'élément récepteur (13ᵣ) une photodiode.

4. Module (11) de connexion optique selon l'une quelconque des revendications précédentes, **caractérisé en ce que** les deux fenêtres (18, 19) sont des fenêtres en matériau transparent dont les faces externes sont revêtues d'une couche écran (17) formé de particule de matériaux conducteur électrique et transparent à la lumière.

5. Module (11) de connexion optique, FSOI, selon la revendication 4, **caractérisé en ce que** la couche écran (17) est un film d'**oxyde d'indium-**étain, ITO.

6. Module (11) de connexion optique selon l'une quelconque des revendications précédentes, **caractérisé en ce que** la paroi supérieure (141) du boitier d'encapsulation (14) est recouverte, au moins au niveau des ouvertures (144, 145) de la paroi supérieure (141) d'une structure grillagée conductrice (17) faisant écran aux champs électromagnétiques et dont les mailles sont dimensionnées de façon à laisser passer la lumière émise par l'élément émetteur (13ₑ) et la lumière reçue par l'élément récepteur (13ᵣ).

7. Module (11) de connexion optique selon l'une quelconque des revendications précédentes, **caractérisé en ce que** le boitier d'encapsulation (14) est un boitier métallique connecté à la masse.

8. Module (11) de connexion optique selon l'une quelconque des revendications 1 à 6, **caractérisé en ce que** le boitier d'encapsulation (14) est un boitier en matériau organique dont la surface externe de la paroi supérieure est recouverte d'une structure grillagée conductrice (17) connecté à la masse, les faces externes des parois latérales du boitier étant revêtues d'une couche de matériau conducteur, une couche de métallisation par exemple.

9. Module (11) de connexion optique selon la revendication 8, **caractérisé en ce que** l'élément émetteur (13ₑ) est monté sur la face interne de la paroi supérieure (141) du boitier d'encapsulation (14), au niveau d'une des fenêtres transparentes, ladite face interne formant un circuit imprimé configuré pour connecter l'élément émetteur (13ₑ) au circuit imprimé (12) formant la structure de base.

10. Module (11) de connexion optique selon la revendication 8, **caractérisé en ce que** l'élément émetteur (13ₑ) est monté sur la face externe de la paroi supérieure (141) du boitier d'encapsulation (14) et connecté à la face interne de ladite paroi supérieure, ladite face interne formant un circuit imprimé configuré pour connecter l'élément émetteur (13ₑ) au circuit imprimé (12) formant la structure de base.

11. Module (11) de connexion optique selon l'une quelconque des revendications précédentes, **caractérisé en ce que** les éléments émetteur (13e) et récepteur (13r) sont des composants en technologie flip chip.

12. Ensemble de deux modules de connexion optique en espace libre (21, 22) selon l'une quelconque des revendications précédentes, agencés l'un par rapport à l'autre de telle façon que la lumière émise par l'élément émetteur (13e) d'un des modules (21) soit reçue par l'élément récepteur (13r) de l'autre module (22) et inversement, l'élément émetteur (13e) de chacun des modules (21) émettant une onde lumineuse de longueur distincte λ1 ou λ2, l'élément récepteur (13r) d'un des modules (22) étant apte à recevoir la longueur d'onde λ1 émise par l'élément émetteur (13e) de l'autre module (21).

13. Ensemble de deux modules de connexion optique en espace libre (21, 22) selon la revendication 12, **caractérisé en ce que** chacun des modules (21, 22) comporte un filtre disposé au niveau de la cavité (16) de l'élément récepteur (13r) et configuré pour filtrer la longueur d'onde du module émetteur (13e) placé dans ce même module (21, 22).

## Patentansprüche

1. Modul (11) zum optischen Anschluss im freien Raum vom Typ "Free Space Optical Interconnection", FSOI, zur Herstellung einer bidirektionalen optischen Verbindung, welche den Transit von Daten mit hoher Geschwindigkeit (störungsfrei) zwischen zwei Elementen (23, 24) einer elektronischen Ausrüstung ermöglicht, **dadurch gekennzeichnet, dass** es mindestens ein Senderelement (13ₑ) beinhaltet, welches in der Lage ist, eine Lichtwelle auszusenden, welche durch ein elektrisches Signal moduliert wird, wobei der Sender (13ₑ) einen nicht fokussierten Strahl aussendet, und ein Empfängerelement (13ᵣ), welches in der Lage ist, eine modulierte Lichtwelle zu empfangen und das modulierende Signal in elektrischer Form wiederzugeben, wobei das Senderelement (13ₑ) und das Empfängerelement (13ᵣ) in einem Verkapselungsgehäuse (14) angeordnet sind, welches konfiguriert ist, um einen Schirm zu bilden, welcher dazu bestimmt ist, das Senderelement (13ₑ) und das Empfängerelement (13ᵣ) gegenüber äußeren elektromagnetischen Emissionen, welche das Modul umgeben (11), zu immunisieren, dessen obere Wand (141) Öffnungen (144, 145) aufweist, welche jeweils gegenüber der Oberfläche des Senderelements (13ₑ) und der Oberfläche des Empfängerelements (13ᵣ) angeordnet sind, wobei die Öffnungen zwei Fenster bilden, welche konfiguriert sind, um die Lichtwellen passieren zu lassen und die anderen äußeren elektromagnetischen Störungen abzuschirmen und um das Passieren des Lichts durch das Gehäuse (14) zu ermöglichen; wobei das Verkapselungsgehäuse (14) zwei getrennte Hohlräume (15, 16) definiert, in welchen jeweils das Senderelement (13ₑ) und das Empfängerelement (13ᵣ) untergebracht sind.

2. Modul (11) zum optischen Anschluss, FSOI, nach Anspruch 1, **dadurch gekennzeichnet, dass** es eine Basisstruktur beinhaltet, bestehend aus einer Leiterplatte (12), welche die Verbindung der in dem Modul (11) untergebrachten Bauteile (13) untereinander und die Verbindung des Moduls (11) mit der Ausrüstung (23, 24) ermöglicht, an welcher es montiert ist, wobei das Verkapselungsgehäuse (14) konfiguriert ist, um auf die Oberfläche der Leiterplatte (12) aufgesetzt zu werden.

3. Modul (11) zur optischen Verbindung nach einem der Ansprüche 1 oder 2, **dadurch gekennzeichnet, dass** das Senderelement (13ₑ) ein Schaltkreis mit Mikro-LED-Matrix und das Empfängerelement (13ᵣ) eine Photodiode ist.

4. Modul (11) zur optischen Verbindung nach einem der vorhergehenden Ansprüche, **dadurch gekennzeichnet, dass** die beiden Fenster (18, 19) Fenster aus transparentem Material sind, deren Außenseiten mit einer Abschirmungsschicht (17) beschichtet sind, welche aus Partikeln elektrisch leitfähiger und für Licht durchlässiger Materialien gebildet sind.

5. Modul (11) zur optischen Verbindung, FSOI, nach Anspruch 4, **dadurch gekennzeichnet, dass** die Abschirmungsschicht (17) ein Film aus Indium-Zinnoxid, ITO, ist.

6. Modul (11) zur optischen Verbindung nach einem der vorhergehenden Ansprüche, **dadurch gekennzeichnet, dass** die obere Wand (141) des Verkapselungsgehäuses (14) mindestens auf Höhe der Öffnungen (144, 145) der oberen Wand (141) mit einer leitfähigen Gitterstruktur (17) bedeckt ist, welche gegen elektromagnetische Felder abschirmt, und deren Maschen so dimensioniert sind, dass sie das durch das Senderelement (13ₑ) ausgesandte Licht und das durch das Empfängerelement (13ᵣ) empfangene Licht passieren lassen.

7. Modul (11) zur optischen Verbindung nach einem der vorhergehenden Ansprüche, **dadurch gekennzeichnet, dass** das Verkapselungsgehäuse (14) ein mit der Masse verbundenes Metallgehäuse ist.

8. Modul (11) zur optischen Verbindung nach einem der Ansprüche 1 bis 6, **dadurch gekennzeichnet, dass** das Verkapselungsgehäuse (14) ein Gehäuse aus einem organischen Material ist, dessen Außenfläche der oberen Wand mit einer leitfähigen Gitterstruktur (17), welche mit der Masse verbunden ist, bedeckt ist, wobei die äußeren Seiten der seitlichen Wände des Gehäuses mit einer Schicht aus leitfähigem Material beschichtet sind, wie beispielsweise einer Metallisierungsschicht.

9. Modul (11) zur optischen Verbindung nach Anspruch 8, **dadurch gekennzeichnet, dass** das Senderelement (13ₑ) an der Innenseite der oberen Wand (141) des Verkapselungsgehäuses (14) montiert ist, auf Höhe eines der transparenten Fenster, wobei die Innenseite eine Leiterplatte bildet, welche konfiguriert ist, um das Senderelement (13ₑ) mit der Leiterplatte (12) zu verbinden, die die Basisstruktur bildet.

10. Modul (11) zur optischen Verbindung nach Anspruch 8, **dadurch gekennzeichnet, dass** das Senderelement(13ₑ) an der Außenseite der oberen Wand (141) des Verkapselungsgehäuses (14) montiert und mit der Innenseite der oberen Wand verbunden ist, wobei die Innenseite eine Leiterplatte bildet, welche konfiguriert ist, um das Senderelement (13ₑ) mit der Leiterplatte (12) zu verbinden, die die Basisstruktur bildet.

11. Modul (11) zur optischen Verbindung nach einem der vorhergehenden Ansprüche, **dadurch gekennzeichnet, dass** das Senderelement (13ₑ) und das Empfängerelement (13r) Bauteile mit Flip-Chip-Technologie sind.

12. Gruppe aus zwei Modulen zur optischen Verbindung im freien Raum (21, 22) nach einem der vorhergehenden Ansprüche, welche in Bezug aufeinander so angeordnet sind, dass das durch das Senderelement (13ₑ) eines der Module (21) ausgesandte Licht durch das Empfängerelement (13ᵣ) des anderen Moduls (22) empfangen wird und umgekehrt, wobei das Senderelement (13ₑ) eines jeden der Module (21) eine Lichtwelle mit spezifischer Länge λ1 oder λ2 aussendet, wobei das Empfängerelement (13ᵣ) eines der Module (22) in der Lage ist, die Wellenlänge λ1, welche durch das Senderelement (13ₑ) des anderen Moduls (21) ausgesendet wird, zu empfangen.

13. Gruppe aus zwei Modulen zur optischen Verbindung im freien Raum (21, 22) nach Anspruch 12, **dadurch gekennzeichnet, dass** jedes der Module (21, 22) einen Filter beinhaltet, welcher auf Höhe des Hohlraums (16) des Empfängerelements (13ᵣ) angeordnet und konfiguriert ist, um die Wellenlänge des in diesem Modul (21, 22) platzierten Sendermoduls (13ₑ) zu filtern.

## Claims

1. A Free Space Optical Interconnection (FSOI) optical connection module (11) for completing a two-way optical link allowing data to be carried at high speed (without disruption) between two elements (23, 24) of an item of electronic equipment, **characterised in that** it comprises at least one emitter element (13ₑ) capable of emitting a light wave modulated by an electric signal, said emitter (13ₑ) emitting a non-focused beam, and a receiver element (13ᵣ) capable of receiving a modulated light wave and of restoring the modulating signal in electrical form, said emitter (13ₑ) and receiver (13ᵣ) elements being arranged in an encapsulation casing (14) configured to form a screen intended to protect said emitter (13ₑ) and receiver (13ᵣ) elements against the external electromagnetic emissions surrounding the module (11), the upper wall (141) of which has openings (144, 145) disposed facing the surface of the emitter element (13ₑ) and the surface of the receiver element (13ᵣ), respectively, said openings forming two windows configured to allow through the light waves and to screen the other external electromagnetic disruptions and to allow light to pass through the casing (14); said encapsulation casing (14) defining two separated cavities (15, 16), in which the emitter element (13ₑ) and the receiver element (13ᵣ) are respectively housed.

2. The FSOI optical connection module (11) as claimed in claim 1, **characterised in that** it comprises a base structure formed by a printed circuit (12) allowing the interconnection of the components (13) housed in the module (11) and the connection of the module (11) to the equipment (23, 24) on which it is mounted, the encapsulation casing (14) being configured to cover the surface of said printed circuit (12).

3. The optical connection module (11) as claimed in any one of claims 1 or 2, **characterised in that** the emitter element (13ₑ) is a micro-LED matrix circuit and the receiver element (13ᵣ) is a photodiode.

4. The optical connection module (11) as claimed in any one of the preceding claims, **characterised in that** the two windows (18, 19) are windows made of transparent material, the outer faces of which are coated with a screen layer (17) formed by particles of materials that are electrically conducting and are transparent to light.

5. The FSOI optical connection module (11) as claimed in claim 4, **characterised in that** the screen layer (17) is a film of Indium Tin Oxide (ITO).

6. The optical connection module (11) as claimed in any one of the preceding claims, **characterised in that** the upper wall (141) of the encapsulation casing (14) is covered, at least at the openings (144, 145) of the upper wall (141), with a conductive grid structure (17) screening the electromagnetic fields and having meshes that are designed so as to allow through the light emitted by the emitter element (13ₑ) and the light received by the receiver element (13ᵣ).

7. The optical connection module (11) as claimed in any one of the preceding claims, **characterised in that** the encapsulation casing (14) is a metal casing connected to the ground.

8. The optical connection module (11) as claimed in any one of claims 1 to 6, **characterised in that** the encapsulation casing (14) is a casing made of organic material, for which the outer surface of the upper wall is covered with a conductive grid structure (17) connected to the ground, wherein the outer faces of the lateral walls of the casing are coated with a layer of conducting material, for example, a metallisation layer.

9. The optical connection module (11) as claimed in claim 8, **characterised in that** the emitter element (13ₑ) is mounted on the inner face of the upper wall (141) of the encapsulation casing (14), at the level of one of the transparent windows, said inner face forming a printed circuit configured to connect the emitter element (13ₑ) to the printed circuit (12) forming the base structure.

10. The optical connection module (11) as claimed in claim 8, **characterised in that** the emitter element (13ₑ) is mounted on the outer face of the upper wall (141) of the encapsulation casing (14) and is connected to the inner face of said upper wall, said inner face forming a printed circuit configured to connect the emitter element (13ₑ) to the printed circuit (12) forming the base structure.

11. The optical connection module (11) as claimed in any one of the preceding claims, **characterised in that** the emitter (13ₑ) and receiver (13ᵣ) elements are components made from flip chip technology.

12. A set of two free space optical connection modules (21, 22) as claimed in any one of the preceding claims, arranged one relative to the other so that the light emitted by the emitter element (13ₑ) of one of the modules (21) is received by the receiver element (13ᵣ) of the other module (22) and vice versa, the emitter element (13ₑ) of each of the modules (21) emitting a light wave *λ*1 or *λ*2 with a distinct length, the receiver element (13ᵣ) of one of the modules (22) being able to receive the wavelength *λ*1 emitted by the emitter element (13ₑ) of the other module (21).

13. The set of two free space optical connection modules (21, 22) as claimed in claim 12, **characterised in that** each of the modules (21, 22) comprises a filter disposed at the level of the cavity (16) of the receiver element (13ᵣ) and configured to filter the wavelength of the emitter module (13ₑ) placed in said module (21, 22).
